# EUROPEAN PATENT APPLICATION

(11) **EP 1 375 886 A2**
(43) Date of publication of application: **02.01.2004**
(21) Application number: 03013461.3
(22) Date of filing: 24.06.2003
(51) Int. Cl.: F02D 41/38, F02D 41/02

(54) **Fuel injection control apparatus and method for an engine**

(30) Priority: 24.06.2002 JP 2002182333
(71) Applicant: Mazda Motor Corporation, Aki-gun, Hiroshima 730-8670 (JP)
(72) Inventor: Nishimura, Hiroyuki, Mazda Motor Corporation, Aki-gun, Hiroshima 730-8670 (JP); Yashiki, Eriko, Mazda Motor Corporation, Aki-gun, Hiroshima 730-8670 (JP)
(74) Representative: Müller-Boré & Partner Patentanwälte

(57) **Abstract**

Particulate amount detecting means is provided for directly or indirectly detecting the amount of particulate trapped in the particulate filter (12), and fuel injection pressure controlling means reduces the fuel injection pressure from the fuel injection pressure adjusted in accordance with the operational condition of the engine, when the particulate amount detected by the particulate amount detecting means reaches a predeterminable amount. Accordingly, the fuel injection pressure is reduced from the fuel injection pressure set in accordance with the operational condition of the engine when the particulate amount trapped in the particulate filter (12) reaches the predeterminable amount, so that the combustion slowly proceeds to increase the exhaust-gas temperature, thereby regenerating the particulate filter (12) while suppressing the occurrence of misfire.

## Description

The present invention relates to a fuel injection control apparatus for an engine, to an engine, to a computer program product for performing a control method when run on a suitable computer, to a computer readable storage medium storing thereon a computer program and to a fuel injection control method for an engine.

Conventional diesel engines have a particulate filter in their exhaust passages to trap exhausted particulate (referred to as particulate) such as carbon included in the exhausted gas, for keeping the particulates from being released into atmosphere.

When the trapped amount of the particulates reaches the trapping capacity of the particulate filter, such engines should regenerate the filter to reinstate its filter function by burning out the particulates trapped in the filter.

In this regard, an approach has been known which controls a fuel injector to retard a fuel injection timing from a normal timing so as to raise the exhaust-gas temperature and promote afterburn, thereby burning out the particulates.

However, the above prior art suffers from the following drawback. In order to promote afterburn and raise the exhaust-gas temperature sufficiently, the fuel injection timing should be significantly retarded. However, a large amount of the retard may cause misfire, but on the other hand, a small amount of the retard to avoid misfire may insufficiently raise the exhaust-gas temperature, resulting in insufficient regeneration of the particulate filter.

Japanese Unexamined Patent Publication H06-299893 discloses the approach that increases the fuel injection pressure in response to an increase in the amount of particulates trapped in the particulate filter (in response to an increase in exhaust pressure). However, this prior art originally aims at the improvement in combustibility until the start of the regeneration operation (before the trapped amount of the particulates reaches the trapping capacity), but does not contribute to the filter regeneration. Thus, the above problem still remains unsolved.

In view of the problem above, an object of the present invention is to provide allow a regeneration of a particulate filter while particularly suppressing the occurrence of misfire.

The object is solved according to the invention by a fuel injection control apparatus for an engine according to claim 1, by an engine according to claim 5, by computer program product according to claim 8, a computer-readable storage medium according to claim 9 and by a fuel injection control method for an engine according to claim 10. Preferred embodiments of the present invention are subject of the dependent claims.

Thus, according to the present invention, the particulate filter is regenerated while the occurrence of misfire is suppressed.

In accordance with the present invention, there is provided a fuel injection control apparatus for an engine, comprising: operational condition detecting means; fuel injection pressure control means; fuel injection timing control means; and particulate amount detecting means. The operational condition detecting means is provided for detecting an operational condition of the engine. The fuel injection pressure control means is provided for adjusting the fuel injection pressure of a fuel injection means of the engine in accordance with the operational condition of the engine detected by the operational condition detecting means. The fuel injection timing control means is provided for setting the fuel injection timing of said fuel injection means preferably near the top dead center of the compression stroke of the engine, and for adjusting the fuel injection timing in accordance with the operational condition of the engine detected by the operational condition detecting means. The particulate amount detecting means is provided for directly or indirectly detecting the amount of particulate trapped in a particulate filter disposed in an exhaust passage of the engine, and capable of trapping particulate in the exhaust gas..

The fuel injection pressure controlling means reduces the fuel injection pressure from the fuel injection pressure adjusted in accordance with the operational condition of the engine, when the particulate amount detected by the particulate amount detecting means reaches a predeterminable amount. In other words, the fuel injection pressure controlling means reduces the fuel injection pressure to below the fuel injection pressure adjusted in accordance with the operational condition of the engine, when the particulate amount detected by the particulate amount detecting means reaches a predetermined or predeterminable amount or more.

Accordingly, the fuel injection pressure is reduced from the fuel injection pressure adjusted in accordance with the operational condition of the engine when the particulate amount trapped in the particulate filter reaches a predetermined or predeterminable amount, which causes slow combustion in cooperation with the injection timing near the top dead center of the compression stroke to increase the exhaust-gas temperature, thereby regenerating the particulate filter while suppressing the occurrence of misfire.

The slow combustion can be attained because the reduced fuel injection pressure decreases the amount of fuel injection per time period, so that the combustion pressure slowly increases after combustion start.

Preferably, the fuel injection control apparatus may further comprise:an exhaust-gas recirculation amount control means. The exhaust-gas recirculation amount control means is provided for controlling an exhaust-gas recirculation valve to adjust the amount of exhaust-gas recirculation in accordance with the operational condition of the engine detected by the operational condition detecting means.

The exhaust-gas recirculation amount control means reduces the amount of the exhaust-gas recirculation from the amount of the exhaust-gas recirculation adjusted in accordance with the operational condition of the engine when the particulate amount detected by the particulate amount detecting means reaches the predetermined or predeterminable amount or more and the fuel injection pressure control means reduces the fuel injection pressure. In other words, the amount of the exhaust-gas recirculation is reduced to below the amount of the exhaust-gas recirculation adjusted in accordance with the operational condition of the engine when the particulate amount detected by the particulate amount detecting means reaches the predeterminable amount and the fuel injection pressure control means reduces the fuel injection pressure.

Accordingly, the amount of the exhaust-gas recirculation can be reduced while the fuel injection pressure is being decreased, so that the degradation in combustibility is prevented while loss in thermal energy is suppressed, thereby regenerating the particulate filter while suppressing the degradation in combustibility.

In particular, the reduced fuel injection pressure causes the combustion to slowly proceed so as to increase the exhaust-gas temperature, but degrades the combustibility. Additionally, even with the increased temperature caused by the reduced fuel injection pressure, the exhaust gas is partly recirculated to the intake passage through the exhaust-gas recirculation passage, so as to cause loss in thermal energy corresponding to the recirculation to the intake passage. Thus, the effect of the temperature rise in the particulate filter decreases if the exhaust-gas recirculation passage is provided.

However, according to the above embodiment, the amount of exhaust-gas recirculation, which causes the thermal energy loss, is reduced during the decrease in the fuel injection pressure, thereby regenerating the particulate filter more effectively while suppressing the degradation in combustibility.

More preferably, the fuel injection timing control means may cause a main injection at a timing near the top dead center of the compression stroke of the engine, and a post injection following the main injection during the expansion stroke of the engine to be performed.

Accordingly, the post injection can be performed in addition to the reduction in the fuel injection pressure, which further increases the exhaust-gas temperature, thereby improving the effect of regeneration of the particulate filter.

This is because the additional fuel injection during the expansion stroke promotes afterburn so as to further increase the exhaust-gas temperature.

Further preferably, the fuel injection timing control means may retard the fuel injection timing from near the top dead center of the compression stroke of the engine, when the particulate amount detected by the particulate amount detecting means reaches the predeterminable amount.

Accordingly, the fuel injection timing is retarded in addition to reducing the fuel injection pressure, which further increases the exhaust-gas temperature, thereby improving the effect of the regeneration of the particulate filter. More preferably, the fuel injection timing may be retarded by such a small amount as not to significantly cause misfire.

In accordance with the present invention, the fuel injection control apparatus according to the present invention or the preferred embodiment thereof may be advantageously used in combination with an engine comprising: accumulating means; fuel injection means, operational condition detecting means, and a particulate filter. The accumulating means is provided for accumulating fuel under high pressure. The fuel injection means is to be connected to the accumulating means, and is provided for injecting fuel at high pressure into a combustion chamber of the engine. The particulate filter is to be disposed in an exhaust passage of the engine and capable of trapping particulate in the exhaust gas.

Preferably, the engine comprises an exhaust-gas recirculation passage and an exhaust-gas recirculation valve. The exhaust-gas recirculation passage is to be provided for connecting an intake passage with the upstream portion of said particulate filter in the exhaust passage. The exhaust-gas recirculation valve is to be disposed in the exhaust-gas recirculation passage.

In accordance with the present invention, there is further provided a computer program product, which, when loaded onto a control apparatus for an engine including at least a computer, carries out the following steps: detecting an operational condition of the engine; directly or indirectly detecting the amount of particulate trapped in a particulate filter of the engine; and reducing the fuel injection pressure from the fuel injection pressure adjusted in accordance with the operational condition of the engine, when the detected particulate amount reaches a predetermined or predeterminable amount.

In accordance with the present invention, there is still further provided a computer-readable storage medium having stored thereon the computer program product according to the present invention or the preferred embodiment thereof.

According to the invention, there is further provided a fuel injection control method for an engine, in particular for use in a fuel injection control apparatus according to the invention or an embodiment thereof, comprising the following steps:
detecting an operational condition of the engine;
directly or indirectly detecting the amount of particulate trapped in a particulate filter of the engine; and reducing the fuel injection pressure from the fuel injection pressure adjusted in accordance with the operational condition of the engine, when the detected particulate amount reaches a predetermined or predeterminable amount.

Other features, aspects, and advantages of the present invention will become apparent from the following description of the invention which refer to the accompanying drawings.
FIG. 1 is an overall construction of the preferred embodiment of the present invention;
FIG. 2 is a control block diagram of the preferred embodiment of the present invention;
FIG. 3 is a diagram showing the post injection timing map of the preferred embodiment of the present invention;
FIGS. 4(a) and 4(b) are timing charts showing waveforms of fuel injection during a normal operational condition and a regenerating condition, respectively, of the preferred embodiment of the present invention;
FIG. 5 is a diagram showing the exhaust-gas recirculation map of the preferred embodiment of the present invention; and
FIG. 6 is a flowchart showing in detail the control of the exhaust-gas recirculation valve, the fuel injection pump, and the fuel injector.

The preferred embodiment of the present invention will now be described with reference to the drawings.

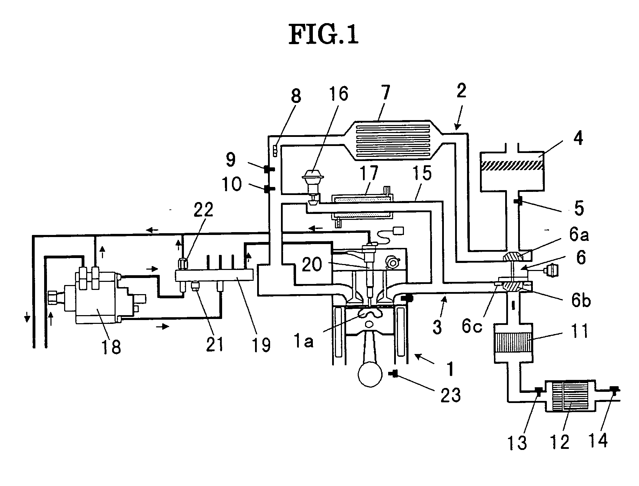

FIG. 1 illustrates the overall construction of this embodiment. Identified by the reference numeral 1 is a four-cylinder diesel engine, which includes an intake passage 2 and an exhaust passage 3 connected thereto.

In the intake passage, from its upstream side to its downstream side, there is disposed at least one of the following: an air filter 4, an air-flow sensor 5, a blower 6a of a VGT turbocharger (i.e. variable geometry turbocharger) 6, an intercooler 7, an intake shutter valve 8, an intake-air temperature sensor 9, and an intake-air pressure sensor 10, preferably in this order.

In the exhaust passage, from its upstream side to its downstream side, there is disposed at least one of the following: a turbine 6b of the VGT turbocharger (i.e. variable geometry turbocharger) 6, a movable vane 6c, an oxidization catalyst 11, and a particulate filter 12. The movable vane 6c is preferably provided for adjusting the exhaust-gas velocity flowing into the turbine 6b.

On both the upstream side and downstream side of the particulate filter 12, exhaust-gas pressure sensors 13, 14 are provided, respectively for detecting the trapped amount of the exhausted particulate (referred to as particulate hereinafter) in the particulate filter 12. The detection is made based on the pressure difference between the detections of exhaust-gas pressure sensors 13 and 14.

The intake passage 2 and the exhaust passage 3 communicate or can communicate with each other through an exhaust-gas recirculation (EGR) passage 15. At the midstream portion of the exhaust-gas recirculation passage 15, an exhaust-gas recirculation valve 16 and a cooler 17 are disposed. The exhaust-gas recirculation valve 16 preferably is vacuum-actuated, and the cooler 17 cools the exhaust gas by use of engine coolant.

Identified by the reference numeral 18 is a fuel injection pump, which supplies fuel from a fuel tank (not shown) to a common rail 19 serving as a preferred accumulating means.

The common rail 19 communicates with respective fuel injectors 20 (one of which is shown in FIG. 1) provided for each of cylinders. In the common rail 19, there is disposed a fuel injection pressure sensor 21 and a relief valve 22. The relief valve 22 opens and releases fuel to the fuel tank side when the pressure of the accumulated fuel in the common rail 19 reaches a limit of an allowable pressure or higher.

Identified by the reference numeral 23 is a crank angle sensor operative to detect engine rotational speed.

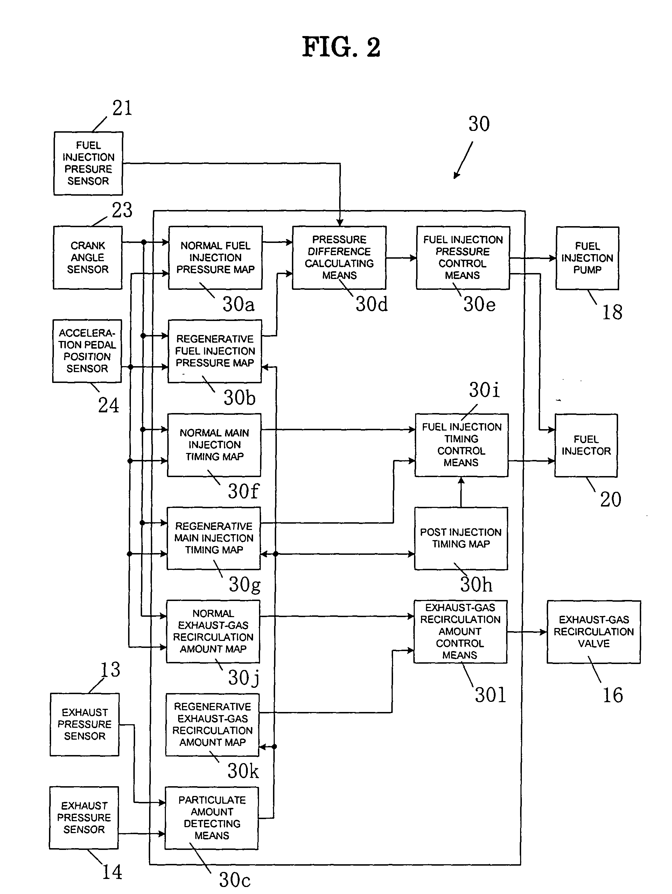

FIG. 2 is a control block diagram for the control of the exhaust-gas recirculation valve 16, the fuel injection valve 18, and the fuel injector 20. Thecontrol unit 30 receives signals detected by the exhaust-gas pressure sensors 12, 13, the crank angle sensor 23, and an acceleration pedal position sensor 24 (not shown). In accordance with the signals, the control unit 30 controls the exhaust-gas recirculation valve 16, the fuel injection valve 18, and the fuel injector 20.

Firstly, a fuel injection pressure control is explained. For controlling the fuel injection pressure, the control unit 30 is preferably provided with: a normal fuel injection pressure map 30a; a regenerative fuel injection pressure map 30b; a exhausted particulate amount detecting means 30c; a pressure difference calculating means 30d; and a fuel injection pressure control means 30e. The normal fuel injection pressure map 30a is used to determine the fuel injection pressure during a normal condition, based on the engine rotational speed and the fuel injection amount (preferably calculated from the engine rotational speed and the acceleration pedal position). The regenerative fuel injection pressure map 30b is used to determine or cause a reduction of the fuel injection pressure from that determined with reference to the normal fuel injection pressure map 30a, when the trapped amount of the exhausted particulates in the particulate filter 12 reaches a predetermined amount or more. The particulate amount detecting means 30c detects the trapped amount of the particulate in the particulate filter 12. The pressure difference calculating means 30d calculates or determines the pressure difference between the actual fuel injection pressure and the fuel injection pressure determined with reference to one of the fuel injection pressure maps. The fuel injection pressure control means 30e adjusts or controls the fuel injection pressure based on the pressure difference calculated by the pressure difference calculating means 30d.

The normal fuel injection control map 30a increases the fuel injection pressure for the higher engine rotational speed and for the more amount of fuel to be injected. The regenerative fuel injection pressure map 30b reduces the fuel injection pressure from that with the normal fuel injection control map 30a. Particularly, with the regenerative fuel injection pressure map 30b, the fuel injection pressure is reduced by a constant amount (e.g. 30 MPa) preferably over the substantially entire operational region.

The fuel injection pressure maps 30a, 30b are selectively used by the particulate amount detecting means 30c.

When the amount of the particulate detected by the particulate amount detecting means 30c reaches a first predetermined or predeterminable amount, preferably substantially equivalent or corresponding to the trapping capacity of the particulate filter 12, the pressure map is changed from the normal fuel injection pressure map 30a to the regenerative fuel injection pressure map 30b. As a result, the amount of the particulate is reduced to or below a second predetermined amount (preferably substantially equivalent or corresponding to the particulate amount of less than approximately 10% of a maximum particulate capacity of the particulate filte 12, most preferably approximately zero) which is smaller than the first predetermined amount. When the particulate filter has been sufficiently regenerated, the map is again changed from the regenerative fuel injection pressure map 30b to the normal fuel injection pressure map 30a.

The particulate amount detecting means 30c detects the amount based on the difference in exhaust pressure across the particulate filter 12.

This detection can be made because the pressure difference depends on the trapped amount of the particulate in such a way that the exhaust pressure increases on the upstream side of the particulate filter as the trapped amount increases.

Then, upon the selection of the injection pressure from the normal fuel injection pressure and the regenerative fuel injection pressure, the pressure difference calculating means 30d calculates the pressure difference between the selected fuel injection pressure and the actual fuel injection pressure detected by the fuel injection pressure sensor 21.

The fuel injection pressure control means 30e adjusts or controls the fuel injection pressure by controlling the fuel injection pump 18 and the fuel injector 20 based on or corresponding to the pressure difference calculated or determined by the pressure difference calculating means 30d. When the actual fuel injection pressure is lower, the control means 30e increases the fuel supply from the fuel injection pump 18 to the common rail 19. On the other hand, when the actual fuel injection pressure is higher, the control means 30e actuates the fuel injector 20 so as to release the fuel to the fuel tank side through the proximal end opposite to an injection bore of the fuel injector 20 while keeping the valve 20 from being substantially opened.

A fuel injection timing control will now be described. Fuel injection preferably can be performed in a divided manner with a main injection and a post injection. The main injection refers to fuel injection performed near the top dead center (TDC) of the compression stroke; the post injection refers to fuel injection performed following the main injection during the expansion stroke.

For controlling the fuel injection timing, the control unit 30 is provided with: a normal main injection timing map 30f; a regenerative main injection timing map 30g; a post injection timing map 30h; and a fuel injection timing control means 30i. The normal main injection timing map 30f is used to determine the main injection timing during a normal condition, based on the engine rotational speed and the fuel injection amount (preferably calculated from the engine rotational speed and the acceleration pedal position). The regenerative main injection timing map 30g is used to retard the main injection timing from that determined with reference to the normal main injection timing map 30f, when the trapped amount of the particulates in the particulate filter 12 reaches a predetermined amount or more. The post injection timing map 30h is used to determine the post injection timing based on the engine rotational speed and the fuel injection amount (calculated from the engine rotational speed and the acceleration pedal position). The fuel injection timing control means 30i adjusts the fuel injection timing with reference to the maps.

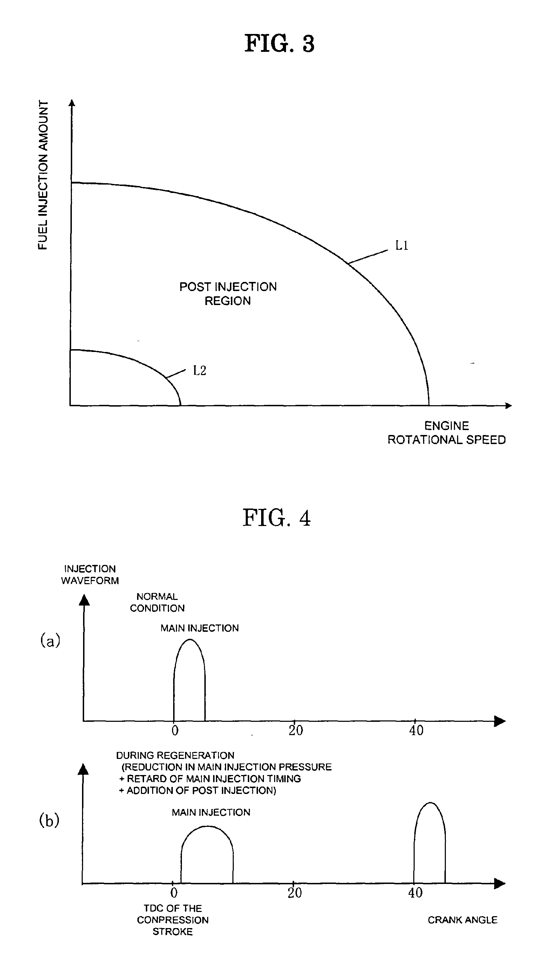

As shown in FIG. 3, the post injection timing map 30h defines a post injection region between lines L1 and L2 only where the post injection is performed, with the post injection being prohibited on the outside of the line L1 (on the larger fuel-injection-amount and/or larger engine-rotational-speed side of the line L1) and on the inside of the line L2 (on the smaller fuel-injection-amount and/or smaller engine-rotational-speed side of the line L2). The reason for this prohibition is as follows:
On the outside of the line L1, high engine rotational speed and/or high engine load provide so high exhaust-gas temperature that the filter spontaneously regenerates. Moreover, in the region, the post injection may cause unduly high exhaust-gas temperature which impairs thermal durability of components in the exhaust system. On the inside of the line L2, low engine rotational speed and/or the low engine load provide too low exhaust-gas temperature to attain the sufficiently high temperature for burning out the particulate even with the post injection. Rather, in the region, the prohibition of the post injection advantageously suppresses the degradation in fuel efficiency.

The normal main injection timing map 30f advances the main injection timing for the higher engine rotational speed and for the more amount of the fuel to be injected. The regenerative main injection timing map 30g retards the main injection timing from that with the normal main injection timing 30a. Particularly, with the regenerative main injection timing map 30g, the main injection timing is preferably retarded by a constant period (e.g. two degrees, which advantageously does not cause misfire) preferably over the substantially entire operational region.

The main injection timing maps 30f, 30g are or can be selectively used by the particulate amount detecting means 30c.

When the amount of the particulate detected by the particulate detecting means 30c reaches the first predetermined amount equivalent to the trapping capacity of the particulate filter 12, the timing map is changed from the normal main injection timing map 30f to the regenerative main injection timing map 30g. As a result, the amount of the particulate is reduced to or below the second predetermined amount (preferably equivalent to the particulate amount of approximately zero) which is smaller than the first predetermined amount. When the particulate filter has been sufficiently regenerated, the map is again changed from the regenerative main injection timing map 30g to the normal main injection timing map 30h corresponding to or causing a change of engine control condition from the regenerative condition to the normal condition.

Then, the fuel injection timing control means 30i controls the fuel injector 20 so as to perform the fuel injection at the main injection timing determined with reference to one of the normal main injection timing map 30h and the regenerative main injection timing map 30g.

When the amount of the particulate detected by the particulate detecting means 30c reaches the first predetermined amount equivalent to the trapping capacity of the particulate filter 12, the fuel injection timing control means 30i controls the fuel injector 20 so as to perform the fuel injection at the post injection timing determined with reference to the post injection timing map 30h.

Accordingly, during a normal condition, preferably only the main injection is performed near the top dead center of the compression stroke as shown in FIG. 4(a). When the amount of the particulate reaches the first predetermined amount equivalent to the trapping capacity of the particulate filter 12, the main injection is retarded with reduced fuel injection pressure, and the post injection is additionally performed as shown in FIG. 4(b).

An exhaust-gas recirculation control will now be described. For controlling the exhaust-gas recirculation amount, the control unit is provided with: a normal exhaust-gas recirculation amount map 30j; a regenerative exhaust-gas recirculation amount map 30k; and an exhaust-gas recirculation amount control means 301. The normal exhaust-gas recirculation amount map 30j is used to determine the exhaust-gas recirculation amount during a normal condition, based on the engine rotational speed and the fuel injection amount (preferably calculated from the engine rotational speed and the acceleration pedal position). The regenerative exhaust-gas recirculation amount map 30k is used to reduce the exhaust-gas recirculation amount from that determined with reference to the normal exhaust-gas recirculation amount map 30f, when the trapped amount of the particulates in the particulate filter 12 reaches a predetermined amount or more. The exhaust-gas recirculation amount control means 301 adjusts or controls the exhaust-gas recirculation amount with reference to the maps e.g. by controlling the exhaust gas recirculation valve 16.

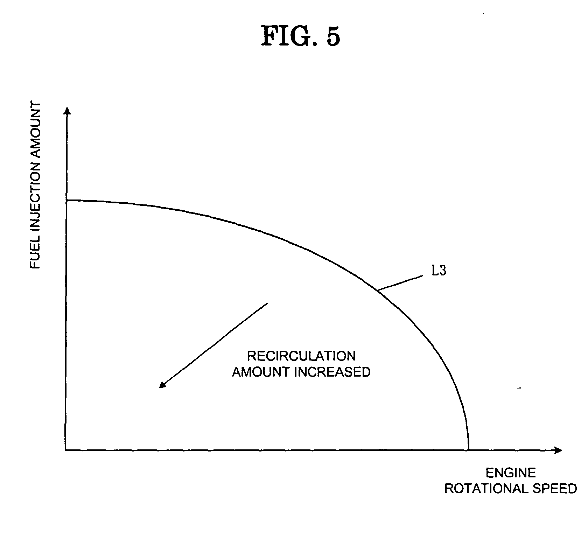

As shown in FIG. 5, a line L3 is set in the normal exhaust-gas recirculation amount map 30j (set on slightly smaller injection-amount side and/or slightly smaller rotational speed side of the line L1 defining the post injection region in FIG. 3). On the outside of the line L3 (on the larger fuel-injection-amount and/or larger engine-rotational-speed side of the line L3), the exhaust-gas recirculation is suspended. On the inside of the line L3 (on the smaller fuel-injection-amount and/or smaller engine-rotational-speed side of the line L3), the exhaust-gas recirculation is performed. In the operational region inside of the line L3, the recirculation amount is reduced for the higher engine rotational speed and/or for the more amount of the fuel to be injected. The regenerative exhaust-gas recirculation amount map 30k reduces the recirculation amount from that with the normal exhaust-gas recirculation amount map 30j. Particularly, with the regenerative exhaust-gas recirculation amount map 30k, the exhaust-gas recirculation amount preferably is reduced by a substantially constant amount (preferably by a substantially constant value in a range of about 5% to about 20%, more preferably from about 8% to about 12%,most preferably about 10%) preferably over the substantially entire operational region.

The exhaust-gas recirculation amount maps 30j, 30k are or can be selectively used by the particulate amount detecting means 30c.

When the amount of the particulate detected by the particulate detecting means 30c reaches the first predetermined amount preferably equivalent or corresponding to the trapping capacity of the particulate filter 12, the timing map is changed from the normal exhaust-gas recirculation amount map 30j to the regenerative exhaust-gas recirculation amount 30k. As a result, the amount of the particulate is reduced to or below the second predetermined amount (preferably substantially equivalent to the particulate amount of approximately zero) which is smaller than the first predetermined amount. When the particulate filter has been sufficiently regenerated, the map is again changed from the regenerative exhaust-gas recirculation amount 30k to the normal exhaust-gas recirculation amount map 30j.

Then, the exhaust-gas recirculation amount control means 301 controls the exhaust-gas recirculation valve 16 so as to achieve the exhaust-gas recirculation amount determined with reference to one of the normal exhaust-gas recirculation amount map 30j and the regenerative exhaust-gas recirculation amount 30k.

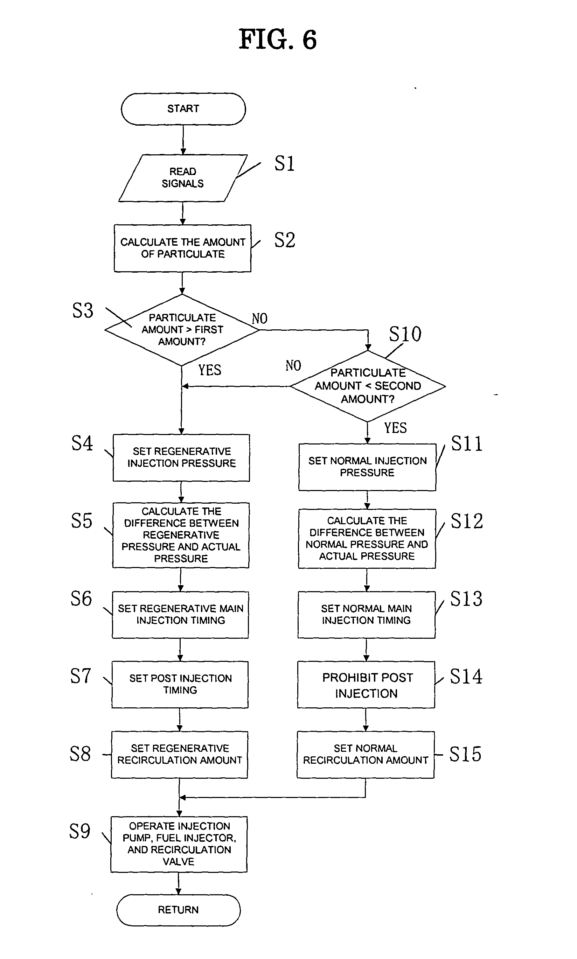

The control of the exhaust-gas recirculation valve 16, the fuel injection pump 18, and the fuel injector 20 will now be described in further detail with reference to the flowchart in FIG. 6. As apparent from the above description, the control unit 30 preferably is loaded with a computer program for carrying out the following control flow. The program is preferably stored in a memory (not shown) coupled to the control unit 30.

As shown in FIG. 6, at step S1, the detected signals from the exhaust pressure sensors 13, 14, the fuel injection pressure sensor 21, the crank angle sensor 23, the acceleration pedal position sensor 24, and/or other sensors are read.

Then, at step S2, the trapped amount of the particulate in the particulate filter 12 is detected preferably based on the pressure difference between the detections of the exhaust pressure sensors 13, 14.

At step S3, a judgement is made as to whether or not the particulate amount calculated at step S2 is equal to or larger than the first predetermined amount preferably substantially equivalent to the trapping capacity of the particulate filter 12.

If YES at step S3, the regeneration control for the particulate filter 12 is performed from step S4 through S9.

Firstly, at step S4, the fuel injection pressure for the regeneration is set with reference to the regenerative fuel injection pressure map 30b, in other words, the fuel injection amount is reduced from that in a normal condition.

At step S5, the pressure difference is calculated between the regenerative fuel injection amount set at step S4 and the actual fuel injection amount detected by the fuel injection pressure sensor 21.

At step S6, the main injection timing for the regeneration is set with reference to the regenerative main injection timing map 30g, in other words, the main injection timing is retarded from that in a normal condition.

At step S7, the post injection timing is set with reference to the post injection timing map 30h.

At step S8, the exhaust-gas recirculation amount is set with reference to the regenerative exhaust-gas recirculation amount map 30k.

At step S9, the operations of the exhaust-gas recirculation valve 16, the fuel injection pump 18, and the fuel injector 20 are controlled based on the control parameters set or calculated or determined at step S4 through S9.

If NO at step S3, the routine proceeds to step S10, where a judgement is made as to whether or not the particulate amount is smaller than the first predetermined amount and is equal to or smaller than the second predetermined amount preferably substantially equivalent to the particulate amount of approximately zero.

If NO at step S10 indicating insufficient burn-out of the particulates, then at step S4, the regenerative control is continuously performed.

If YES at step S10 indicating sufficient burn-out of the particulates and the completion of the regeneration of the particulate filter 12, then a normal control is performed from step S11 through S15 and step S9.

That is, step S11 sets or controls the fuel injection pressure for a normal condition; step S12 calculates the pressure difference between the normal fuel injection pressure set as above and the actual fuel injection pressure detected by the fuel injection pressure sensor 21; step S13 sets or controls the normal main injection timing; step S14 prohibits the post fuel injection; and step S15 sets or controls the normal exhaust-gas recirculation amount.

As described above, in accordance with the preferred embodiment, when the trapped amount of the particulates in the particulate filter 12 reaches the first predetermined amount or more, the fuel injection pressure is reduced, the main injection timing is retarded, the post injection is added, and the exhaust-gas recirculation amount is reduced.

Thus, the reduced fuel injection pressure causes the combustion to slowly proceed so as to promote afterburn, thereby increasing the exhaust-gas temperature to burn out the particulates trapped in the particulate filter 12. As a result, the particulate filter 12 is at least partly regenerated while the occurrence of misfire is advantageously suppressed.

Then, the main injection timing is retarded while keeping the combustion from causing misfire, so that the combustion further slowly progresses so as to increase the exhaust-gas temperature. As a result, the regeneration effect of the particulate filter 12 is further improved.

Additionally, the fuel additionally preferably injected during the post injection combusts to further increase the exhaust-gas temperature, thereby further improving the regeneration effect of the particulate filter 12.

Moreover, the exhaust-gas recirculation amount is preferably reduced, thereby suppressing the degradation in combustibility due to the control for reducing the fuel injection pressure, and inhibiting loss in thermal energy due to the recirculation of high-temperature exhaust-gas to the intake system. This suppresses the drop in the exhaust-gas temperature, thereby further improving regeneration effect of the particulate filter 12.

It should be appreciated that the exhaust-gas recirculation amount may be reduced to zero during the control of reducing the fuel injection pressure, though this embodiment reduces the recirculation amount by a certain amount during the control.

Additionally, though this embodiment detects the amount of the particulate based on the pressure difference across the particulate filter 12, other methods may be adopted. For example, the amount of the particulate may be indirectly detected by the following steps: experimentally measuring the amount of the particulate in the exhaust-gas from the engine for each operational condition; storing the data in a memory of the control unit 30; periodically reading the data of the particulate amount corresponding to the current operational condition; and cumulating the particulate amount.

Moreover, though this embodiment runs the computer program for performing the control of the present invention which has been stored in the memory of the control unit 30, the program may be stored in a storage medium (e.g. CD-ROM) separate from the control unit 30 or may be implemented in a dedicated circuitry, logic component and/or programmable device (e.g. an EPROM).

In addition, the computer program may be obtained through wireless communication means such as the Internet and stored e.g. in a rewritable ROM.
It should be appreciate that the preferred embodiment of the present invention is described for a diesel engine, but the present invention may apply to gasoline engines or any other engines that may produce carbon particulate. Also, the application of the present invention is not limited to automotive engines, but includes engines in industrial use or engines used for other purposes.
Particulate amount detecting means 13, 14, 30c is provided for directly or indirectly detecting the amount of particulate trapped in the particulate filter 12, and fuel injection pressure controlling means reduces the fuel injection pressure from the fuel injection pressure adjusted in accordance with the operational condition of the engine 1, when the particulate amount detected by the particulate amount detecting means 13, 14, 30c reaches a predeterminable amount. Accordingly, the fuel injection pressure is reduced from the fuel injection pressure set in accordance with the operational condition of the engine when the particulate amount trapped in the particulate filter 12 reaches the predetermined or predeterminable amount, so that the combustion slowly proceeds to increase the exhaust-gas temperature, thereby regenerating the particulate filter 12 while advantageously suppressing the occurrence of misfire.

## Claims

1. A fuel injection control apparatus for an engine (1), comprising:
operational condition detecting means (23, 24) for detecting an operational condition of the engine (1);
fuel injection pressure control means (30e) for adjusting the fuel injection pressure of a fuel injection means (20) of the engine (1) in accordance with the operational condition of the engine (1) detected by said operational condition detecting means (23, 24);
fuel injection timing control means (30i) for setting the fuel injection timing of said fuel injection means (20) preferably near the top dead center of the compression stroke of the engine (1), and for adjusting the fuel injection timing in accordance with the operational condition of the engine (1) detected by said operational condition detecting means (23, 24);
particulate amount detecting means (13, 14, 30c) for directly or indirectly detecting the amount of particulate trapped in a particulate filter (12) disposed in an exhaust passage (3) of the engine (1) and capable of trapping particulate in the exhaust gas,
wherein said fuel injection pressure control means (30e) reduces the fuel injection pressure from the fuel injection pressure adjusted in accordance with the operational condition of the engine (1), when the particulate amount detected by said particulate amount detecting means (13, 14, 30c) reaches a predeterminable amount.

2. The fuel injection control apparatus for an engine (1) as defined in claim 1, further comprising:
exhaust-gas recirculation amount control means (301) for controlling an exhaust-gas recirculation valve (16) to adjust the amount of exhaust-gas recirculation in accordance with the operational condition of the engine (1) detected by said operational condition detecting means (23, 24);
wherein said exhaust-gas recirculation amount control means (301) reduces the amount of the exhaust-gas recirculation from the amount of the exhaust-gas recirculation adjusted in accordance with the operational condition of the engine (1) when the particulate amount detected by said particulate amount detecting means (13, 14, 30c) reaches the predeterminable amount and said fuel injection pressure control means (30e) reduces the fuel injection pressure.

3. The fuel injection control apparatus for an engine (1) as defined in any one of claims 1 and 2,
wherein said fuel injection timing control means (30i) causes a main injection at a timing near the top dead center of the compression stroke of the engine (1), and a post injection following the main injection during the expansion stroke of the engine (1)to be performed.

4. The fuel injection control apparatus for an engine (1) as defined in any one of claims 1 to 3,
wherein said fuel injection timing control means (30i) retards the fuel injection timing from near the top dead center of the compression stroke of the engine (1), when the particulate amount detected by said particulate amount detecting means (13, 14, 30c) reaches the predeterminable amount.

5. An engine (1) comprising:
accumulating means (19) for accumulating fuel under high pressure;
fuel injection means (20) to be connected to said accumulating means (19), for injecting fuel at high pressure into a combustion chamber of the engine (1);
a particulate filter (12) to be disposed in an exhaust passage (3) of the engine (1), capable of trapping particulate in the exhaust gas; and
a fuel injection control apparatus as defined in any one of preceding claims.

6. The engine (1) according to claim 5, comprising:
an exhaust-gas recirculation passage (15) provided for connecting an intake passage (2) with the upstream portion of said particulate filter (12) in the exhaust passage (3); and
an exhaust-gas recirculation valve (16) disposed in said exhaust-gas recirculation passage (15).

7. The engine (1) according to claim 5, wherein said fuel injection means (20) performs a main injection at a timing near the top dead center of the compression stroke of the engine (1), and a post injection following the main injection during the expansion stroke of the engine (1).

8. A computer program product, which, when loaded onto a control apparatus for an engine (1) including at least a computer (30), carries out the following steps:
detecting an operational condition of the engine (1);
directly or indirectly detecting the amount of particulate trapped in a particulate filter (12) of the engine (1); and
reducing the fuel injection pressure from the fuel injection pressure adjusted in accordance with the operational condition of the engine (1), when the detected particulate amount reaches a predeterminable amount.

9. Computer-readable storage medium having stored thereon the computer program product as defined in claim 7.

10. A control method for an engine (1), comprising the following steps:
detecting an operational condition of the engine (1);
directly or indirectly detecting the amount of particulate trapped in a particulate filter (12) of the engine (1); and
reducing the fuel injection pressure from the fuel injection pressure adjusted in accordance with the operational condition of the engine (1), when the detected particulate amount reaches a predeterminable amount.
